# EUROPEAN PATENT APPLICATION

(11) **EP 1 874 049 A2**
(43) Date of publication of application: **02.01.2008**
(21) Application number: 07250078.8
(22) Date of filing: 09.01.2007
(51) Int. Cl.: H04N 5/76

(54) **Method of controlling a television receiver and television receiver using the same**

(30) Priority: 22.06.2006 KR 20060056281
(71) Applicant: LG Electronics Inc., Yongdungpo-gu Seoul (KR)
(72) Inventor: Seo, Wan Suk LG Institute, LG Electronics Inc.,, Gumi-si, Gyeongsangbuk-do 730-070 (KR)
(74) Representative: Neobard, William John

(57) **Abstract**

A method of controlling a television receiver for receiving at least one broadcast signal or moving picture displays a recording list according to content of the recorded matter, thereby enabling a user to block selectively files of a recording list based on a comparison of a display rating and attribute information of each moving picture, e.g., a rating corresponding to content. The method includes steps of determining attribute information of the at least one broadcast signal; storing the determined attribute information in correspondence with a recording list index identifying the stored at least one broadcast signal; and generating a recording list according to the stored recording list index and the stored attribute information. The television receiver includes a storage device for storing the received at least one broadcast signal and a recording list index identifying the stored at least one broadcast signal and for storing attribute information of the at least one broadcast signal; a user interface for setting a display rating; and a system controller for generating a recording list according to the stored recording list index and the stored attribute information and for discriminating, in searching the moving picture files, a display of the recording list by comparing the moving picture rating to the display rating.

## Description

The present invention relates to reception of television, and more particularly but not exclusively to a method of controlling a television receiver to display a recording list based on attribute information and to a television receiver using the same.

In storing (recording) video signals received by a television receiver, which may be provided with or connected to a storage device such as a digital video recorder, a received signal may be stored according to a preset rating relevant to the content of a moving picture. That is, a rating, such as that used by the Motion Picture Association of America (MPAA), may be pre-assigned for each program of a broadcast signal, whereby each program can be recorded with a corresponding rating. Thus, a recorded moving picture (video) file contains rating information as an attribute. An assigned attribute may selectively prevent access to video data of one or more stored files for its deletion, editing, and playback (reproduction).

At the time of playback, a recording list, for example, a list of titles, may be displayed to enable a user selection of a stored video file as desired. In doing so, the storage device is searched and then the recording list is displayed along with attribute information, i.e., rating information, corresponding to the searched files of the recording list.

In a contemporary method of displaying the recording list as above, stored attribute information can be known and displayed, but there is no discrimination of a recording list according to user preferences, such that all displayed information of every file of the recording list is available and can be viewed regardless of assigned attribute. The displayed recording list may include titles and corresponding ratings, may further include such information as broadcast channel, broadcast/recording/playback times, and recording duration or file size, and may even include a preview. Therefore, though playback of a restricted file of the displayed recording list may be prohibited by its assigned attribute, the display of the recording list, which is necessary for initiating playback selection to other files of the list, nevertheless provides information of the restricted file to any user, including at least its presence in the storage device. In other words, even if restricted access to one or more stored files may be intended, all users may freely obtain information of the restricted file or files through an unrestricted viewing of the recording list.

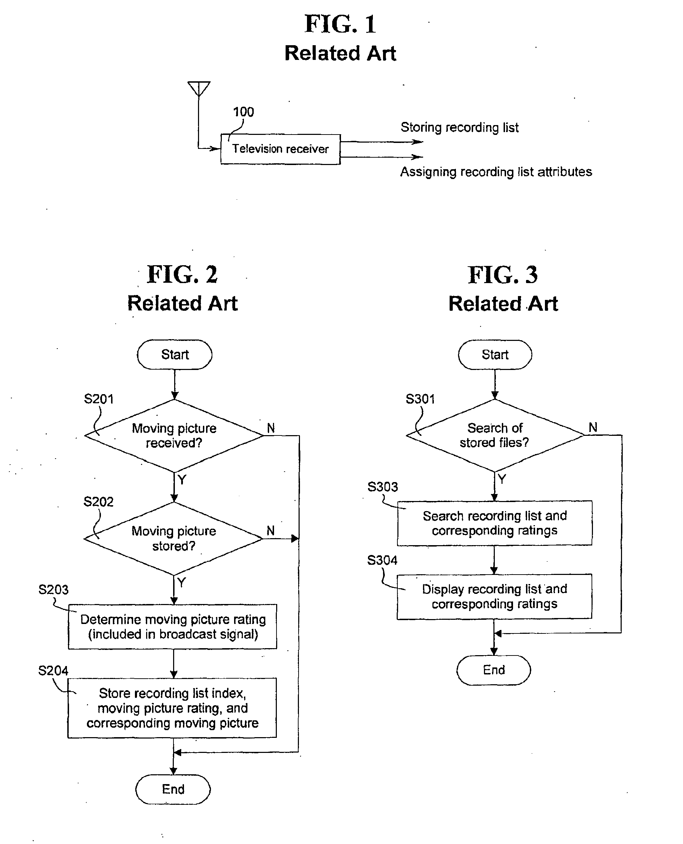

FIG. 1 illustrates a general television receiver enabling recording list storage while storing recorded material, e.g., a moving picture, which may correspond to a broadcast signal (program). Here, in response to a user command to record a broadcast signal received via an antenna or to record such a signal received via an external device, a television receiver 100 stores the received broadcast signal in correspondence to a recording list index and assigned attribute information corresponding to a program of the received broadcast signal. Here, the attribute information is essentially the program's rating. In selecting a stored video file for playback, a file search process is executed, whereupon a system controller of the television receiver displays a recording list including a corresponding set of ratings.

Referring to FIG. 2, illustrating a process for recording material as a moving picture file, it is first determined whether a broadcast signal is being input, and if so, whether a user inputs a command signal for storing the received broadcast signal as a moving picture file (S201, S202). Thereafter, a moving picture rating is determined for the broadcast signal or program, for example, by the broadcaster (S203). Once a rating is determined, attribute information is stored together with a corresponding recording list index to form a recording list. Thus, the recording list index and the moving picture rating of the received broadcast signal (moving picture) are stored together with the video data of the received broadcast signal (S204).

Referring to FIG. 3, illustrating a process for searching recorded material, for example, to enable playback of a selected recording or file, a controller checks whether a command signal for searching for a stored broadcast signal or program (file) is input by a user (S301). If the command signal is input, the controller searches a list of previously recorded material and corresponding attributes, e.g., ratings of stored broadcast signals (S302). The controller then displays the searched results, namely, the recording list and corresponding ratings.

As described above, at the time of selecting a video file for playback, which is an initial stage of video reproduction using a digital video recorder, the corresponding recording list is displayed in its entirety, regardless of the rating of any one of the stored video files and regardless of whether its restricted access is intended. Such indiscriminate display of the entire recording list, which may include a preview, significantly reduces the intended effect of a rating setting function.

An object of embodiments is to provide a method of controlling a television receiver and a television receiver using the same, by which a list of recorded files (recording list) can be discriminately displayed according to the content of recorded material.

Another object of embodiments is to provide a method of controlling a television receiver and a television receiver using the same, which enables a user to block selectively the display of a recording list according to the content of recorded material, to thereby improve the effect of a rating setting function.

Another object of embodiments is to provide a method of controlling a television receiver and a television receiver using the same, which enhances the functionality of displaying a recording list by providing selectivity to a recording list display according to the content of recorded material.

Another object of embodiments is to provide a method of controlling a television receiver and a television receiver using the same, which enables a user to set selectively a recording list display rating according to the content of recorded material.

In one aspect there is provided a method of controlling a television receiver for receiving at least one broadcast signal to be stored in a storage device. The method comprises determining attribute information of the at least one broadcast signal; storing the determined attribute information in correspondence with a recording list index identifying the stored at least one broadcast signal; and generating a recording list according to the stored recording list index and the stored attribute information

In another aspect, there is provided a method of controlling a television receiver for receiving at least one broadcast signal to be stored in a storage device. The method comprises generating a recording list by storing a moving picture rating in correspondence with a recording list index identifying the stored at least one broadcast signal; setting a display rating for the recording list; and discriminating a display of the recording list by comparing the moving picture rating to the display rating.

In another aspect, there is provided a television receiver for receiving at least one broadcast signal. The television receiver comprises a storage device for storing the received at least one broadcast signal and a recording list index identifying the stored at least one broadcast signal and for storing attribute information of the at least one broadcast signal; a user interface for setting a display rating and for determining attribute information of the stored at least one broadcast signal; and a system controller for generating a recording list according to the stored recording list index and the stored attribute information and for discriminating, in searching the moving picture files, a display of the recording list by comparing the moving picture rating to the display rating.

In an embodiment, upon storing a moving picture file or creating a folder of moving picture files, a user determines (stores) via a user interface a recording list display rating as a reference for displaying a list of recorded moving pictures and may set a rating for each moving picture. In searching stored moving picture files, each moving picture rating as set by the broadcaster or a user is compared to the display rating as set by the user, to determine whether to display the corresponding moving picture as part of a recording list. Thus, display of the recording list may be discriminated according to user (viewer) or according to viewer group.

In an embodiment, in the event that a received broadcast signal includes a moving picture rating (e.g., a motion picture rating such as an MPAA rating), the broadcast signal's rating may be initially determined by the broadcaster, but an authorized user may subsequently reset (adjust) the rating of any stored file, either upon first recording the moving picture or when searching files for playback, i.e., whenever the recording list is displayed. Accordingly, in order to change the rating of a stored moving picture file, the user must be authorized to view a recording list including the corresponding file. The authorized user may also arbitrarily set the display rating at any time.

An embodiment of the invention will now be described by way of example only with reference to the accompanying drawings, in which:

FIG. 1 is a block diagram of a general television receiver for storing a recording list according to assigned attributes while a broadcast signal is being recorded;

FIG. 2 is a flowchart of a process for recording material according to a related art;

FIG. 3 is a flowchart of a process for searching recorded material to enable selective playback operations according to a related art;

FIG. 4 is a block diagram of an embodiment of a television receiver;

FIG. 5 is a flowchart of a process of recording material embodying the present invention;

FIG. 6 is a flowchart of a process for searching recorded material to enable selective playback operations embodying the present invention;; and

FIG. 7 is a diagram schematically illustrating the restricted display of an exemplary recording list embodying the present invention..

Wherever possible, like reference designations will be used throughout the drawings to refer to the same or similar parts.

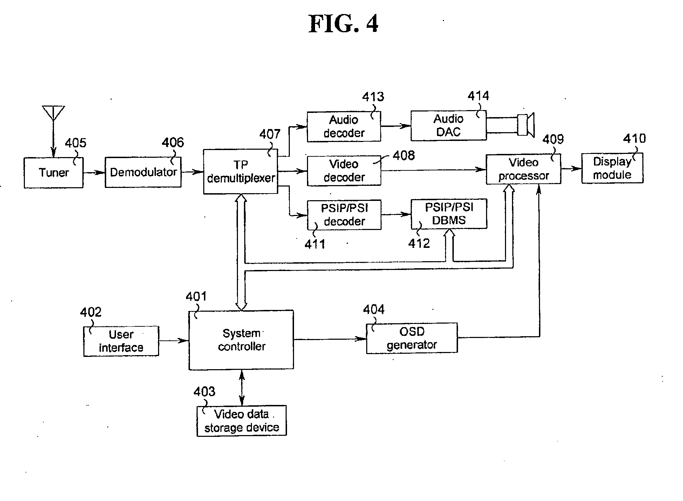

Referring to FIG. 4, a television receiver embodying the present invention comprises a system controller 401 for generating various control signals to control the overall system using an internally stored program executed in response to command signals (user selections) input by a user. User selection commands are input to the system controller via a user interface 402, which may comprise one or more of a local keypad and remote controller, for inputting a command signal to the system controller according to a user selection. The television receiver has a video data storage device 403 for storing, under control of the system controller, at least one broadcast signal (moving picture or video file), its attribute information, a corresponding recording list index, and a display rating. Each file to be stored may correspond to a received (tuned) broadcast signal, and stored files may be retrieved (accessed) by selecting a file name from a displayed recording list formed using on-screen display (OSD) data generated by an OSD generator 404, which generates the OSD data, including the recording list data, under control of the system controller.

The television receiver further comprises a tuner 405 for tuning a received digital broadcast signal according to a user selection; a demodulator 406 for demodulating the tuned broadcast signal; a transport stream (TP) demultiplexer 407 for outputting an audio stream, a video stream, and a program & system information protocol and program & system information (PSIP/PSI) stream under control of the system controller, by demultiplexing a transport packet demodulated by the demodulator; a video decoder 408 for decoding the video stream; a video processor 409 for processing the decoded video stream under control of the system controller, to output a displayable video signal to a display module 410 for displaying the processed video signal combined with the OSD data output from the OSD generator; a PSIP/PSI decoder 411 for decoding the PSIP/PSI stream; a PSIP/PSI database management system (DBMS) 412 for managing the decoded PSIP/PSI data under control of the system controller; an audio decoder 413 for decoding the audio stream output from the demultiplexer; and a digital-to-analog converter (DAC) 414 for converting the decoded audio stream into an analog audio signal and for outputting the converted signal to a speaker.

The PSIP information, which may follow the protocol of the ATSC Standard 65, includes information for describing programs and data transmitted in digital television broadcasting and other information required for receiving television broadcasts. Basically, the PSIP information is a set of tables devised to operate within all transport streams for digital television broadcasting and provides information necessary for signal reception of a television receiver by describing necessary information for a virtual channel transmitted in a specific transport stream. Such tables may include a system time table carrying time information, a master guide table for managing a transport table, a virtual channel table, and a rating region table defining rating references applicable per region or country. Thus, while the attribute information of an exemplary embodiment as described herein is a moving picture rating, the attribute information stored in correspondence with the recording list index to be searched at the time of playback may, according to the present invention, be other information available in the decoded PSIP/PSI stream or similar information otherwise set arbitrarily by the user via the user interface 402. In any event, an index of the recording list is stored in correspondence with the attribute information.

Since a PSIP/PSI stream is typically included in a received digital broadcast signal, attribute information corresponding to a received broadcast signal may be stored in the video data storage device 403 along with the video data of the received broadcast signal. On the other hand, the video data storage device 403 of the present invention may be partitioned to include an area separate from that for storing the at least one broadcast signal, so that attribute information can be separately accessed. Alternatively, the attribute information, recording list indices, and display rating may be stored in another memory, such as a system memory (not shown) interactive with the system controller 401.

Attribute information is determined for at least one broadcast signal to be stored in a storage device, and the attribute information is stored in correspondence with a recording list index identifying the stored at least one broadcast signal, so that a recording list may be generated according to the stored recording list index and the stored attribute information and so that the generated recording list may be displayed in response to a user selection to initiate a playback operation, wherein the displayed recording list excludes the stored at least one broadcast signal if the corresponding moving picture rating is higher than the set display rating or includes the stored at least one broadcast signal if the corresponding moving picture rating is lower than the set display rating. The recording list is generated by storing a moving picture rating in correspondence with a recording list index identifying the stored at least one broadcast signal, and the display rating is set for the recording list, thereby enabling a discriminated a display of the recording list by simply comparing the moving picture rating to the display rating.

In an embodiment, the attribute information is a moving picture rating. Thus, a display rating is set for the recording list to be displayed, to serve as a display reference value relative to the moving picture rating, where a higher display reference value is assigned to more restrictive viewing of the recording list and where a lower display reference value is assigned to less restrictive viewing of the recording list. Accordingly, the display rating may be imparted with a value corresponding to a level of intended viewer restriction of the stored recording list. For example, a higher value may be assigned for more graphic or sensitive content, and a lower value may be assigned for more general audiences, i.e., less restricted viewing.

The television receiver has or may be connected to a storage device, for example, the video storage device 403, for storing the received at least one broadcast signal and a recording list index identifying the stored at least one broadcast signal and for storing attribute information of the at least one broadcast signal, according to user selection made via the user interface 402. The user interface 402 enables the user to arbitrarily set the display rating for each recording list, to reset the display ratings, for example, during a search operation, to determine the attribute information in the event that the received broadcast signal has no rating information, and to assign (set) such attribute information as desired. The user interface 402 also enables control of the recording, search, and playback operations according to user selections, i.e., command signals input to the system controller 401, which perform various operations. Specifically, the system controller 401 generates the recording list according to the stored recording list index and the stored attribute information; discriminates, in searching the moving picture files, a display of the recording list by comparing the moving picture rating to the display rating; searches the recording list in response to a user selection to initiate a playback operation; and displays the recording list according to the search.

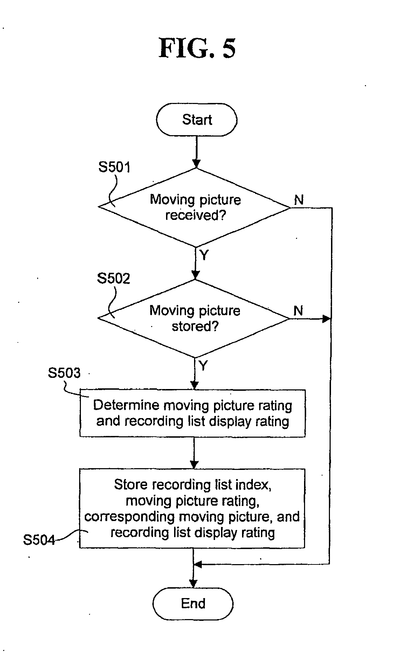

Operational examples of the television receiver of FIG. 4 will now be explained in detail with reference to FIGS. 5-7.

Referring to FIG. 5, illustrating the storage of recorded material, the system controller 401 determines whether a broadcast signal is tuned according to a user selection or whether an input signal is received from an external device (not shown) connected to the television receiver, and if so, whether a user inputs via the user interface 402 a command signal for storing the received broadcast signal as a moving picture file (S501, S502). Thereafter, the system controller 401 determines a moving picture rating of the received broadcast signal, either by the broadcaster or in response to a user selection, and determines in response to a user selection a display rating for a recording list of broadcast signals (S503). The moving picture rating may be included in a digital broadcast signal and thus preset by the broadcaster or may be set by a user arbitrarily at the time of recording.

With the ratings determined as above, the received broadcast signal is recorded for subsequent playback, by storing a recording list index in correspondence with a moving picture file. That is, under control of the system controller 401, the recording list index, the attribute information of the moving picture file (moving picture rating), and the display rating are stored in the video data storage device 403 in correspondence with a stored video file (S504). The attribute information and the display rating enable a discriminated display of the recording list at the time of initiating a playback operation.

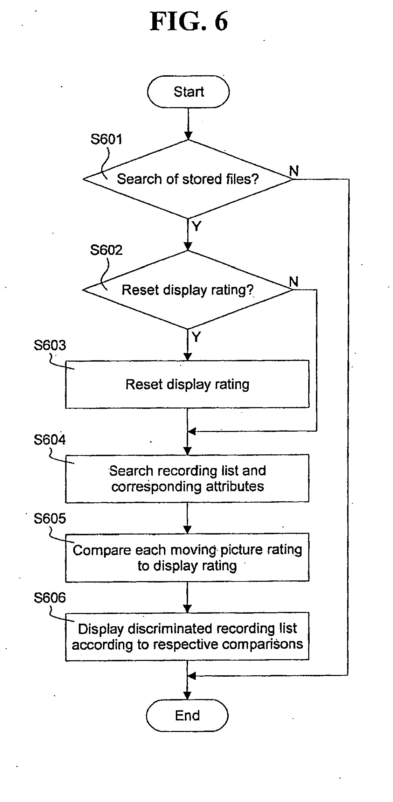

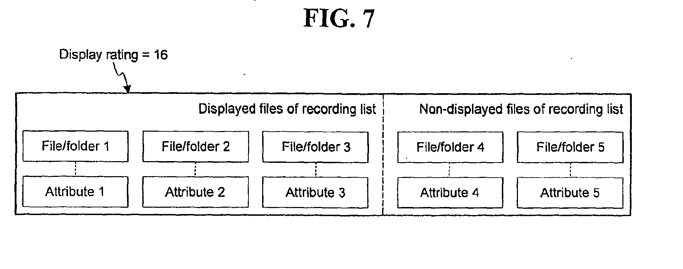

Referring to FIG. 6, illustrating the search of previously stored material, the system controller 401 first determines whether there is a user input of a command signal to search the stored files (5601). If the search command signal is input, the system controller 401 may determine whether there is a user input of a command signal to reset the display rating of a previously stored recording list (S602), whereupon a display rating may be reset (S603). In response to the above search command signal, which is input to initiate a playback operation, the system controller 401 searches the list of recorded broadcast signals, i.e., a stored recording list, and their respective attribute information, e.g., the corresponding moving picture ratings (S604), compares each moving picture rating to the current display rating (S605), and restrictively displays the recording list according to the comparison result (S606). For example, the restricted (discriminated) display of an exemplary recording list according to the present invention is diagrammed in FIG. 7.

Referring to FIG. 7, the display rating for a recording list and a rating of recorded material (broadcast signal or moving picture file) are compared to each other, the determine the display of the corresponding recording list, namely, to determine which of the moving picture files will be included in the displayed recording list and which of the moving picture files will be excluded in the displayed recording list. In particular, if each of files/folders 1, 2, and 3 has an attribute (e.g., attributes 1, 2, and 3) corresponding to a rating value of, say, 16 or lower, the corresponding recording list index is included in the makeup of the corresponding recording list. Thus, in searching files, displayed files/folders 1,2, and 3 will appear in the displayed recording list during a search to perform a playback operation. Meanwhile, assuming each of files/folders 4 and 5 has an attribute (e.g., attributes 4 and 5) corresponding to a rating value higher than the value of the display rating as set by the user (display rating = 16), the corresponding recording list index is excluded in the makeup of the corresponding recording list. In this case, as shown in the example of FIG. 7, non-displayed files/folders 4 and 5 will be omitted from the displayed recording list during a search to perform a playback operation.

In embodiments, in the case of a recording list including one or more moving picture files containing restricted material, when the recording list is displayed to enable playback operations, the display of moving picture files to which restrictive ratings (e.g., ratings having a value higher than a reference rating) have been assigned is prevented by generating for display a recording list in which the restricted files have been excluded (omitted) according to a recording list display rating (i.e., the reference rating) set by a user. Accordingly, embodiments enable a recording list to be discriminately displayed according to the content of recorded material, thereby enabling a user to block selectively the display of a recording list according to the content of recorded material, which improves the effect of a rating setting function. Embodiments further enable a user to set selectively a recording list display rating according to the content of recorded material, thereby enhancing the functionality of displaying a recording list by providing selectivity to a recording list display according to the content of recorded material.

The features of the described embodiment are not intended to restrict the scope of protection.

## Claims

1. A method of controlling a television receiver for receiving at least one broadcast signal to be stored in a storage device, the method comprising:
determining attribute information of the at least one broadcast signal;
storing the determined attribute information in correspondence with a recording list index identifying the stored at least one broadcast signal; and
generating a recording list according to the stored recording list index and the stored attribute information.

2. A method according to claim 1, wherein the attribute information is a moving picture rating.

3. A method according to claim 2, further comprising:
setting a display rating for the recording list, the set display rating serving as a display reference value relative to the moving picture rating, where a higher display reference value is assigned to more restrictive viewing of the recording list and where a lower display reference value is assigned to less restrictive viewing of the recording list.

4. A method according to claim 3, wherein the display rating has a value corresponding to a level of intended viewer restriction of the stored recording list.

5. A method according to claim 3, further comprising:
displaying the generated recording list in response to a user selection to initiate a playback operation,
wherein the displayed recording list excludes the stored at least one broadcast signal if the corresponding moving picture rating is higher than the set display rating.

6. A method according to claim 4, wherein the displayed recording list includes the stored at least one broadcast signal if the corresponding moving picture rating is lower than the set display rating.

7. A method according to claim 1, wherein the moving picture rating has a value corresponding to a level of intended viewer restriction of the stored at least one broadcast signal.

8. A method according to claim 1, wherein the attribute information is included in the received broadcast signal.

9. A method according to claim 1, wherein the attribute information is determined by a user during said storing.

10. A method according to claim 1, wherein said storing is performed according to a user selection when recording the at least one broadcast signal.

11. A method according to claim 1, further comprising:
displaying the generated recording list in response to a user selection to initiate a playback operation.

12. A method according to claim 1, wherein the at least one broadcast signal is one of an input signal tuned according to a user selection and an input signal received from an external device connected to the television receiver.

13. A method of controlling a television receiver for receiving at least one broadcast signal to be stored in a storage device, the method comprising:
generating a recording list by storing a moving picture rating in correspondence with a recording list index identifying the stored at least one broadcast signal;
setting a display rating for the recording list; and
discriminating a display of the recording list by comparing the moving picture rating to the display rating.

14. A method according to claim 13, said discriminating comprising:
searching the recording list in response to a user selection to initiate a playback operation.

15. A method according to claim 14, further comprising:
displaying the recording list in response to the user selection to initiate a playback operation.

16. A method according to claim 13, wherein said setting is performed when recording the at least one broadcast signal.

17. A method according to claim 16, further comprising:
resetting the display rating according to user preference.

18. A method according to claim 13, further comprising:
searching the recording list in response to a user selection to initiate a playback operation; and
resetting the display rating according to user preference.

19. A method according to claim 18, wherein said resetting is performed by a user during said searching.

20. A method according to claim 13, wherein the display rating is determined by a broadcaster of the at least one broadcast signal.

21. A method according to claim 13, wherein the display rating is arbitrarily set by a user.

22. A television receiver for receiving at least one broadcast signal, the television receiver comprising:
a storage device for storing the received at least one broadcast signal and a recording list index identifying the stored at least one broadcast signal and for storing attribute information of the at least one broadcast signal;
a user interface for setting a display rating; and
a system controller for generating a recording list according to the stored recording list index and the stored attribute information and for discriminating, in searching the moving picture files, a display of the recording list by comparing the moving picture rating to the display rating.

23. A television receiver according to claim 22, wherein said system controller is configured to search the recording list in response to a user selection to initiate a playback operation and to display the recording list according to the search.

24. A television receiver according to claim 22, wherein having means for setting, according to user preference, as the attribute information a moving picture rating.

25. A television receiver according to claim 24, wherein said user interface enables the display rating to be reset according to user preference.
